(19) Europäisches Patentamt
European Patent Office
Office européen des brevets

(11) EP 0 881 239 B1

(12) EUROPÄISCHE PATENTSCHRIFT

(45) Veröffentlichungstag und Bekanntmachung des Hinweises auf die Patenterteilung:
**18.12.2002 Patentblatt 2002/51**

(51) Int Cl.[7]: **C08F 210/06**, C08F 2/34, C08F 4/654, C08F 4/02

(21) Anmeldenummer: **98108693.7**

(22) Anmeldetag: **13.05.1998**

# (54) Statistische Propylencopolymerisate

Statistic propylene copolymers

Copolymères statistiques de propylène

(84) Benannte Vertragsstaaten:
**AT BE DE ES FI FR GB IT NL SE**

(30) Priorität: **28.05.1997 DE 19722569**

(43) Veröffentlichungstag der Anmeldung:
**02.12.1998 Patentblatt 1998/49**

(73) Patentinhaber:
- **Basell Poliolefine Italia S.p.A.**
  **20124 Milano (IT)**
  Benannte Vertragsstaaten:
  **DE FR GB IT**
- **Novolen Technology Holdings C.V.**
  **2596 JJ Den Haag (NL)**
  Benannte Vertragsstaaten:
  **AT BE ES FI NL SE**

(72) Erfinder:
- **Kersting, Meinolf, Dr.**
  **67435 Neustadt (DE)**
- **Schöne, Werner, Dr.**
  **69198 Schriesheim (DE)**
- **Langhauser, Franz, Dr.**
  **67152 Ruppertsberg (DE)**

(74) Vertreter: **Colucci, Giuseppe et al**
**Basell Poliolefine Italia S.p.A.**
**Intellectual Property**
**P.le G. Donegani 12**
**44100 Ferrara (IT)**

(56) Entgegenhaltungen:
**EP-A- 0 761 696**
**EP-A- 0 778 295**
**EP-A- 0 780 432**
**US-A- 5 455 303**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 881 239 B1

## Beschreibung

Die vorliegende Erfindung betrifft statistische Copolymerisate des Propylens mit Ethylen und mindestens einem $C_4$-$C_{10}$-Alk-1-en, deren Schmelzpunkt, bestimmt nach der DSC-Methode, kleiner oder gleich 135°C ist, erhältlich durch

Polymerisation von Propylen, Ethylen und mindestens einem $C_4$-$C_{10}$-Alk-1-en in Abwesenheit eines flüssigen Reaktionsmediums aus der Gasphase heraus bei einer Temperatur von 50 bis 100°C und einem Druck von 15 bis 40 bar in Gegenwart eines Ziegler-Natta-Katalysatorsystems enthaltend,

a) eine titanhaltige Feststoffkomponente, enthaltend mindestens eine halogenhaltige Magnesiumverbindung, einen Elektronendonor und ein anorganisches Oxid als Träger,

b) eine Aluminiumverbindung und

c) eine weitere Elektronendonorverbindung,

dadurch gekennzeichnet, daß man das Verhältnis der Partialdrücke von Propylen und Ethylen auf von 20:1 bis 100:1 und das Verhältnis der Partialdrücke von dem oder den $C_4$-$C_{10}$-Alk-1-enen und Ethylen auf 2,5:1 bis 20:1 einstellt.

Außerdem betrifft die vorliegende Erfindung ein Verfahren zur Herstellung solcher statistischer Copolymerisate sowie deren Verwendung als Folien, Fasern oder Formkörper.

Katalysatorsysteme vom Typ der Ziegler-Natta-Katalysatoren sind u.a. aus der EP-B 014 523, der EP-A 023 425, der EP-A 045 975 und der EP-A 195 497 bekannt. Diese Systeme werden insbesondere zur Polymerisation von $C_2$-$C_{10}$ Alk-1-enen verwendet und enthalten u.a. Verbindungen des mehrwertigen Titans, Aluminiumhalogenide und/ oder -alkyle, sowie Elektronendonorverbindungen, insbesondere Siliciumverbindungen, Ether, Carbonsäureester, Ketone und Lactone, die einerseits in Verbindung mit der Titankomponente und andererseits als Cokatalysator verwendet werden.

Die Herstellung der Ziegler-Natta-Katalysatoren geschieht üblicherweise in zwei Schritten. Zuerst wird die titanhaltige Feststoffkomponente hergestellt. Anschließend wird diese mit dem Cokatalysator umgesetzt. Mit Hilfe der so erhaltenen Katalysatoren wird anschließend die Polymerisation durchgeführt.

In der US-A 48 57 613 und der US-A 52 88 824 werden Katalysatorsysteme vom Typ der Ziegler-Natta-Katalysatoren beschrieben, die neben einer titanhaltigen Feststoffkomponente und einer Aluminiumverbindung noch organische Silanverbindungen als externe Elektronendonorverbindungen aufweisen. Die dabei erhaltenen Katalysatorsysteme zeichnen sich u.a. durch eine gute Produktivität aus und liefern Polymerisate des Propylens mit einer hohen Stereospezifität, d.h. einer hohen Isotaktizität, einem geringen Chloranteil und einer guten Morphologie, d.h. einem geringen Anteil an Feinstkorn. Copolymerisate des Propylens mit anderen Alk-1-enen, die mit solchen Katalysatorsystemen zugänglich sind, werden in der EP-A 450 456 beschrieben.

Für einige Anwendungsbereiche von Polymerisaten des Propylens ist es erforderlich, daß diese sich u.a. durch eine hohe Steifigkeit und nur geringe Anteile an xylollöslichen Polymerisatpartikeln auszeichnen. Dies gilt beispielsweise für Lebensmittelfolien, die aus derartigen Polymerisaten des Propylens hergestellt werden. Die aus der EP-A 450 456 bekannten Copolymerisate des Propylens erfüllen diese Anforderungen nicht in ausreichendem Maße.

In der EP-A 778 295 werden Propylencopolymerisate mit einpolymerisierten $C_2$-$C_{10}$-Alk-1-enen beschrieben, wobei für den Fall der Copolymerisate aus Propylen, Ethylen und But-1-en das Verhältnis der Partialdrücke von But-1-en und Ethylen im Bereich von 0,02:1 bis 2:1 gehalten wird.

Weiterhin ist aus der US-A 44 83 917 ein Verfahren zur Herstellung von Terpolymeren aus Propylen, Ethylen und anderen $\alpha$-Olefinen bekannt. Die nach diesem Verfahren erhaltenen Terpolymere weisen zwar einen geringen Gehalt an löslichen Anteilen auf, deren Siegelfähigkeit, ist jedoch noch verbesserungswürdig. Darüber hinaus weisen die erhaltenen Terpolymere einen relativ hohen Chlorgehalt auf.

Der vorliegenden Erfindung lag daher die Aufgabe zugrunde, ausgehend von den in der EP-A 450 456 beschriebenen Copolymerisaten des Propylens verbesserte Copolymerisate zu entwickeln, welche die obengenannten Nachteile nicht aufweisen.

Demgemäß wurden die eingangs definierten statistischen Copolymerisate des Propylens mit Ethylen und mindestens einem weiteren $C_4$-$C_{10}$-Alk-1-en gefunden.

Unter der Bezeichnung $C_4$-$C_{10}$-Alk-1-ene sollen dabei lineare oder verzweigte Alk-1-ene verstanden werden, insbesondere But-1-en, Pent-1-en, Hex-1-en, Hept-1-en oder Oct-1-en oder Gemische aus diesen Comonomeren, wobei bevorzugt But-1-en verwendet wird.

Die erfindungsgemäßen Copolymerisate weisen einen Schmelzpunkt kleiner oder gleich 135°C auf. Im allgemeinen liegt der Schmelzpunkt aber nicht unter 80°C. Als Schmelzpunkt soll der nach ISO 3146 mittels Differential Scanning Calorimetry (DSC) mit einer Aufheizrate von 10°C pro Minute bestimmte Schmelzpunkt verstanden werden.

Erfindungsgemäß werden die statistischen Copolymerisate in Gegenwart eines Ziegler-Natta-Katalysatorsystems erhalten, das im wesentlichen eine titanhaltige Feststoffkomponente a) und als Cokatalysatoren eine Aluminiumverbindung b) und eine weitere Elektronendonorverbindung c) enthält.

Zur Herstellung der titanhaltigen Feststoffkomponente a) werden als Titanverbindungen im allgemeinen die Halogenide oder Alkoholate des drei- oder vierwertigen Titans verwendet, wobei auch Titanalkoxyhalogenverbindungen oder Mischungen verschiedener Titanverbindungen in Betracht kommen. Beispiele für geeignete Titanverbindungen sind $TiBr_3$, $TiBr_4$, $TiCl_3$, $TiCl_4$, $Ti(OCH_3)Cl_3$, $Ti(OC_2H_5)Cl_3$, $Ti(O\text{-iso-}C_3H_7)Cl_3$, $Ti(O\text{-n-}C_4H_9)Cl_3$, $Ti(OC_2H_5)Br_3$, $Ti(O\text{-n-}C_4H_9)Br_3$, $Ti(OCH_3)_2Cl_2$, $Ti(OC_2H_5)_2Cl_2$, $Ti(O\text{-n-}C_4H_9)_2Cl_2$, $Ti(OC_2H_5)_2Br_2$, $Ti(OCH_3)_3Cl$, $Ti(OC_2H_5)_3Cl$, $Ti(O\text{-n-}C_4H_9)_3Cl$ $Ti(OC_2H_5)_3Br$, $Ti(OCH_3)_4$, $Ti(OC_2H_5)_4$ oder $Ti(O\text{-n-}C_4H_9)_4$. Bevorzugt werden die Titanverbindungen eingesetzt, die als Halogen Chlor enthalten. Ebenfalls bevorzugt sind die Titanhalogenide, die neben Titan nur Halogen enthalten, und hierbei vor allem die Titanchloride und insbesondere Titantetrachlorid.

Die titanhaltige Feststoffkomponente a) enthält mindestens eine oder eine Mischung verschiedener halogenhaltiger Magnesiumverbindungen. Als Halogene werden hierbei Chlor, Brom, Jod oder Fluor oder Mischungen aus zwei oder mehr Halogenen verstanden, wobei Chlor oder Brom und insbesondere Chlor bevorzugt sind. Die halogenhaltigen Magnesiumverbindungen werden entweder bei der Herstellung der titanhaltige Feststoffkomponente a) direkt eingesetzt oder bei deren Herstellung gebildet. Als Magnesiumverbindungen, die sich zur Herstellung der titanhaltige Feststoffkomponente a) eignen, kommen vor allem die Magnesiumhalogenide, wie insbesondere die Chloride oder Bromide, oder Magnesiumverbindungen, aus denen die Halogenide in üblicher Weise z.B. durch Umsetzung mit Halogenierungsmitteln erhalten werden können wie Magnesiumalkyle, Magnesiumaryle, Magnesiumalkoxy- oder Magnesiumaryloxyverbindungen oder Grignardverbindungen in Betracht. Geeignete Halogenierungsmitteln sind beispielsweise Halogene, Halogenwasserstoffe, $SiCl_4$ oder $CCl_4$ und bevorzugt Chlor oder Chlorwasserstoff.

Beispiele für halogenfreie Verbindungen des Magnesiums, die zur Herstellung der titanhaltige Feststoffkomponente a) geeignet sind, sind Diethylmagnesium, Di-n-propylmagnesium, Di-iso-propylmagnesium, Di-n-butylmagnesium, Di-sek.-butylmagnesium, Di-tert.butylmagnesium, Diamylmagnesium, n-Butylethylmagnesium, n-Butylsek.-butylmagnesium, n-Butyloctylmagnesium, Diphenylmagnesium, Diethoxymagnesium, Di-n-propyloxymagnesium, Di-isopropyloxymagnesium, Di-n-butyloxymagnesium, Di-sek.-butyloxymagnesium, Ditert.-butyloxymagnesium, Diamyloxymagnesium, n-Butyloxyethoxymagnesium, n-Butyloxy-sek.-butyloxymagnesium, n-Butyloxyoctyloxymagnesium oder Diphenoxymagnesium. Von diesen sind n-Butylethylmagnesium oder n-Butyloctylmagnesium besonders bevorzugt.

Als Beispiele für Grignardverbindungen sind Methylmagnesiumchlorid, Ethylmagnesiumchlorid, Ethylmagnesiumbromid, Ethylmagnesiumjodid, n-Propylmagnesiumchlorid, n-Propylmagnesiumbromid, n-Butylmagnesiumchlorid, n-Butylmagnesiumbromid, sek.-Butylmagnesiumchlorid, sek.-Butylmagnesiumbromid, tert.-Butylmagnesiumchlorid, tert.-Butylmagnesiumbromid, Hexylmagnesiumchlorid, Octylmagnesiumchlorid, Amylmagnesiumchlorid, Isoamylmagnesiumchlorid, Phenylmagnesiumchlorid und Phenylmagnesiumbromid zu nennen.

Bevorzugt werden neben Magnesiumdichlorid oder Magnesiumdibromid vor allem die Magnesiumdi-($C_1$-$C_{10}$-alkyl)-Verbindungen zur Herstellung der titanhaltige Feststoffkomponente a) eingesetzt.

Darüber hinaus enthält die titanhaltige Feststoffkomponente a) Elektronendonorverbindungen, beispielsweise mono- oder polyfunktionelle Carbonsäuren, Carbonsäureanhydride oder Carbonsäureester, ferner Ketone, Ether, Alkohole, Lactone oder phosphor- oder siliciumorganische Verbindungen.

Bevorzugt werden als Elektronendonorverbindungen innerhalb der titanhaltigen Feststoffkomponente Carbonsäurederivate und insbesondere Phthalsäurederivate der allgemeinen Formel (II)

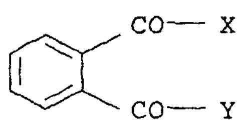

(II)

verwendet, wobei X und Y jeweils für ein Chlor- oder Bromatom oder einen $C_1$-$C_{10}$-Alkoxyrest oder gemeinsam für Sauerstoff in Anhydridfunktion stehen. Besonders bevorzugte Elektronendonorverbindungen sind Phthalsäureester, wobei X und Y einen $C_1$-$C_8$-Alkoxyrest, beispielsweise einen Methoxy-, Ethoxy-, n-Propyloxy-, iso-Propyloxy- n-Butyloxy-, sek.-Butyloxy-, iso-Butyloxy- oder einen tert.-Butyloxyrest, bedeuten. Beispiele für vorzugsweise eingesetzte Phthalsäureester sind Diethylphthalat, Di-n-butylphthalat, Di-iso-butylphthalat, Di-n-pentylphthalat, Di-n-hexylphthalat, Di-n-heptylphthalat, Di-n-octylphthalat oder Di-2-ethylhexylphthalat.

Weiter bevorzugte Elektronendonorverbindungen innerhalb der titanhaltigen Feststoffkomponente sind Diester von 3- oder 4-gliedrigen, gegebenenfalls substituierten Cycloalkyl-1,2-dicarbonsäuren, sowie Monoester von substituierten Benzophenon-2-carbonsäuren oder substituierten Benzophenon-2-carbonsäuren. Als Hydroxyverbindungen werden bei diesen Estern die bei Veresterungsreaktionen üblichen Alkanole verwendet, beispielsweise $C_1$-$C_{15}$-

Alkanole oder $C_5$-$C_7$-Cycloalkanole, die ihrerseits eine oder mehrere $C_1$-$C_{10}$-Alkylgruppen tragen können, ferner $C_6$-$C_{10}$-Phenole.

Es können auch Mischungen verschiedener Elektronendonorverbindungen verwendet werden.

Bei der Herstellung der titanhaltigen Feststoffkomponente a) werden in der Regel pro Mol der Magnesiumverbindung von 0,05 bis 2,0 mol, bevorzugt von 0,2 bis 1,0 mol, der Elektronendonorverbindungen eingesetzt.

Darüber hinaus enthält die titanhaltige Feststoffkomponente a) mindestens ein anorganisches Oxid als Träger. Es wird in der Regel ein feinteiliges anorganisches Oxid als Träger verwendet, welches einen mittleren Teilchendurchmesser von 5 bis 200 µm, bevorzugt von 20 bis 70 µm, aufweist. Unter dem mittleren Teilchendurchmesser ist hierbei der Medianwert der durch Coulter-Counter-Analyse bestimmten Korngrößenverteilung zu verstehen.

Vorzugsweise ist das feinteilige anorganische Oxid aus Primärpartikeln zusammengesetzt, die einen mittleren Teilchendurchmesser der Primärpartikel von 1 bis 20 µm, insbesondere von 1 bis 5 µm aufweisen. Bei den sogenannten Primärpartikeln handelt es sich um poröse, granuläre Oxidpartikel, welche im allgemeinen durch Mahlung aus einem Hydrogel des anorganischen Oxids erhalten werden.

Es ist auch möglich die Primärpartikeln vor ihrer Weiterverarbeitung zu sieben.

Weiterhin ist das bevorzugt zu verwendende anorganische Oxid auch dadurch charakterisiert, daß es Hohlräume bzw. Kanäle mit einem mittleren Durchmesser von 0,1 bis 20 µm, insbesondere von 1 bis 15 µm, aufweist, deren makroskopischer Volumenanteil am Gesamtpartikel im Bereich von 5 bis 30 %, insbesondere im Bereich von 10 bis 30 %, liegt.

Die Bestimmung der mittleren Teilchendurchmesser der Primärpartikel sowie des makroskopischen Volumenanteils der Hohlräume und Kanäle des anorganischen Oxids erfolgt zweckmäßigerweise durch Bildanalyse mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des anorganischen Oxids. Die erhaltenen Aufnahmen werden ausgemessen und daraus die mittleren Teilchendurchmesser der Primärpartikel sowie der makroskopische Volumenanteil der Hohlräume und Kanäle bestimmt.

Das bevorzugt zu verwendende anorganische Oxid kann beispielsweise durch Sprühtrockenen des vermahlenen Hydrogels, welches hierzu mit Wasser oder einem aliphatischen Alkohol vermischt wird, erhalten werden. Solche feinteiligen anorganischen Oxide sind auch im Handel erhältlich.

Das feinteilige anorganische Oxid weist ferner üblicherweise ein Porenvolumen von 0,1 bis 10 $cm^3/g$, bevorzugt von 1,0 bis 4,0 $cm^3/g$, und eine spezifische Oberfläche von 10 bis 1000 $m^2/g$, bevorzugt von 100 bis 500 $m^2/g$, auf, wobei hier die durch Quecksilber-Porosimetrie nach DIN 66133 und durch Stickstoff-Adsorption nach DIN 66131 bestimmten Werte zu verstehen sind.

Es ist auch möglich ein anorganisches Oxid einzusetzen, dessen pH-Wert, d.h. der negative dekadische Logarithmus der Protonenkonzentration, im Bereich von 1 bis 6,5 und insbesondere im Bereich von 2 bis 6, liegt.

Als anorganische Oxide kommen vor allem die Oxide des Siliciums, des Aluminiums, des Titans oder eines der Metalle der I. bzw. der II. Hauptgruppe des Periodensystems in Betracht. Als besonders bevorzugtes Oxid wird neben Aluminiumoxid oder Magnesiumoxid oder einem Schichtsilikat vor allem Siliciumoxid (Kieselgel) verwendet. Es können auch Mischoxide wie Aluminiumsilikate oder Magesiumsilikate eingesetzt werden.

Die als Träger eingesetzten anorganischen Oxide enthalten auf ihrer Oberfläche Wasser. Dieses Wasser ist zum Teil physikalisch durch Adsorption und zum Teil chemisch in Form von Hydroxylgruppen gebunden. Durch thermische oder chemische Behandlung kann der Wassergehalt des anorganischen Oxids reduziert oder ganz beseitigt werden, wobei in der Regel bei einer chemischen Behandlung übliche Trocknungsmittel wie $SiCl_4$, Chlorsilane oder Aluminiumalkyle zum Einsatz kommen. Der Wassergehalt geeigneter anorganischer Oxide beträgt von 0 bis 6 Gew.-%. Vorzugsweise wird ein anorganische Oxid in der Form, wie es im Handel erhältlich ist, ohne weitere Behandlung eingesetzt.

Die Magnesiumverbindung und das anorganische Oxid liegen innerhalb der titanhaltigen Feststoffkomponente a) bevorzugt in solchen Mengen vor, daß pro Mol des anorganischen Oxids von 0,1 bis 1,0 mol, insbesondere von 0,2 bis 0,5 mol der Verbindung des Magnesiums vorhanden sind.

Bei der Herstellung der titanhaltigen Feststoffkomponente a) kommen in der Regel ferner $C_1$- bis $C_8$-Alkanole wie Methanol, Ethanol, n-Propanol, Isopropanol, n-Butanol, sek.-Butanol, tert.-Butanol, Isobutanol, n-Hexanol, n-Heptanol, n-Oktanol oder 2-Ethylhexanol oder deren Mischungen zum Einsatz. Bevorzugt wird Ethanol verwendet.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 48 57 613 und der US-A 52 88 824 beschrieben.

Bei der Herstellung der titanhaltigen Feststoffkomponente a) wird bevorzugt folgendes zweistufige Verfahren angewandt:

In der ersten Stufe versetzt man zunächst in einem inerten Lösungsmittel, bevorzugt einem flüssigen Alkan oder einem aromatischen Kohlenwasserstoff, z.B. Toluol oder Ethylbenzol, das anorganische Oxid mit einer Lösung der magnesiumhaltigen Verbindung, wonach man dieses Gemisch von 0,5 bis 5 Stunden bei einer Temperatur von 10

bis 120°C in der Regel unter Rühren reagieren läßt. Anschließend fügt man üblicherweise unter ständigem Rühren ein Halogenierungsmittel im wenigstens zweifachen, bevorzugt im wenigstens fünffachen molaren Überschuß, bezogen auf die magnesiumhaltige Verbindung, hinzu. Nach etwa 30 bis 120 Minuten fügt man diesem Reaktionsprodukt bei einer Temperatur von 10 bis 150°C die Titanverbindung sowie die Elektronendonorverbindung hinzu. Dabei setzt man pro Mol Magnesium des aus der ersten Stufe erhaltenen Feststoffs von 1 bis 15 mol, bevorzugt von 2 bis 10 mol der Titanverbindung und von 0,01 bis 1 mol, insbesondere von 0,3 bis 0,7 mol, der Elektronendonorverbindung ein. Dieses Gemisch läßt man wenigstens 10 Minuten, bevorzugt wenigstens 30 Minuten bei einer Temperatur im Bereich von 10 bis 150°C, insbesondere von 60 bis 130°C, im allgemeinen unter Rühren reagieren. Der so erhaltene feste Stoff wird anschließend abfiltriert und mit einem $C_7$-$C_{10}$-Alkylbenzol, bevorzugt mit Ethylbenzol, gewaschen.

In der zweiten Stufe extrahiert man den aus der ersten Stufe erhaltenen Feststoff bei Temperaturen im Bereich von 100 bis 150°C mit überschüssigem Titantetrachlorid oder einer im Überschuß vorliegenden Lösung von Titantetrachlorid in einem inerten Lösungsmittel, vorzugsweise einem $C_7$-$C_{10}$-Alkylbenzol, wobei das Lösungsmittel wenigstens 5 Gew.-% Titantetrachlorid enthält. Die Extraktion wird in der Regel wenigstens 30 Minuten lang durchgeführt. Danach wäscht man das Produkt solange mit einem flüssigen Alkan, bis der Gehalt der Waschflüssigkeit an Titantetrachlorid weniger als 2 Gew.-% beträgt.

Geeignete Aluminiumverbindungen b) sind außer Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können. Bevorzugte Elektronendonorverbindungen sind dabei siliciumorganische Verbindungen der allgemeinen Formel (I)

$$R^1{}_nSi(OR^2)_{4-n} \qquad (I)$$

wobei $R^1$ gleich oder verschieden ist und eine $C_1$-$C_{20}$-Alkylgruppe, eine 5- bis 7-gliedrige Cycloalkylgruppe, die ihrerseits durch $C_1$-$C_{10}$-Alkyl substituiert sein kann, eine $C_6$-$C_{18}$-Arylgruppe oder eine $C_6$-$C_{18}$-Aryl-$C_1$-$C_{10}$-alkylgruppe bedeutet, $R^2$ gleich oder verschieden ist und eine $C_1$-$C_{20}$-Alkylgruppe bezeichnet und n für die ganzen Zahlen 1, 2 oder 3 steht. Besonders bevorzugt werden solche Verbindungen, in denen $R^1$ eine $C_1$-$C_8$-Alkylgruppe oder eine 5- bis 7-gliedrige Cycloalkylgruppe sowie $R^2$ eine $C_1$-$C_4$-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisopropyl-tert.-butylsilan, Dimethoxyisobutyl-sek.-butylsilan und Dimethoxyisopropyl-sek.-butylsilan hervorzuheben.

Die als Cokatalysatoren wirkenden Verbindungen b) und c) kann man sowohl einzeln, nacheinander in beliebiger Reihenfolge als auch gleichzeitig zusammen auf die titanhaltige Feststoffkomponente a) einwirken lassen. Üblicherweise geschieht dies bei Temperaturen von 0 bis 150°C, insbesondere von 20 bis 90°C und Drücken von 1 bis 100 bar, insbesondere von 1 bis 40 bar.

Bevorzugt werden die Cokatalysatoren b) und c) in einer solchen Menge eingesetzt, daß das Atomverhältnis zwischen Aluminium aus der Aluminiumverbindung b) und Titan aus der titanhaltigen Feststoffkomponente a) von 10:1 bis 800:1, insbesondere von 20:1 bis 200:1 beträgt und das Molverhältnis zwischen der Aluminiumverbindung b) und der Elektronendonorverbindung c) von 1:1 bis 250:1, insbesondere von 10:1 bis 80:1, beträgt.

Die Herstellung der erfindungsgemäßen statistischen Copolymerisate des Propylens mit Ethylen und mindestens einem $C_4$-$C_{10}$-Alk-1-en können in den üblichen, für die Polymerisation von Alk-1-enen verwendeten Reaktoren entweder absatzweise oder bevorzugt kontinuierlich u.a. als Suspensionspolymerisation oder bevorzugt als Gasphasenpolymerisation durchgeführt werden. Geeignete Reaktoren sind u.a. kontinuierlich betriebene Rührreaktoren, die ein Festbett aus feinteiligem Polymerisat enthalten, welches üblicherweise durch geeignete Vorrichtungen wie Rührer in Bewegung gehalten wird. Selbstverständlich kann die Reaktion auch in einer Reihe von mehreren, hintereinander geschalteten Reaktoren durchgeführt werden.

Das zu den erfindungsgemäßen statistischen Copolymerisaten führende, ebenfalls erfindungsgemäße Verfahren wird in der Weise durchgeführt, daß man Propylen zusammen mit Ethylen und mindestens einem $C_4$-$C_{10}$-Alk-1-enen in Abwesenheit eines flüssigen Reaktionsmediums aus der Gasphase heraus bei Temperaturen im Bereich

von 50 bis 100°C, bevorzugt von 60 bis 90°C, Drücken im Bereich von 15 bis 40 bar, bevorzugt von 20 bis 35 bar und üblicherweise bei mittleren Verweilzeiten von 0,5 bis 5 Stunden, bevorzugt von 0,5 bis 3 Stunden, polymerisiert.

Die Comonomere Propylen, Ethylen und das oder die $C_4$-$C_{10}$-Alk-1-ene werden dabei in solchen Mengen eingesetzt, daß das Partialdruckverhältnis zwischen Propylen und Ethylen im Bereich von 20:1 bis 100:1, insbesondere von 40:1 bis 90:1 liegt, und das Partialdruckverhältnis zwischen dem oder den $C_4$-$C_{10}$-Alk-1-en und Ethylen im Bereich von 2,5:1 bis 20:1 und insbesondere von 3,5:1 bis 10:1 liegt.

Die Molmasse der statistischen Copolymerisate des Propylens kann durch Zugabe von in der Polymerisationstechnik gebräuchlichen Reglern, beispielsweise von Wasserstoff, kontrolliert und über einen weiten Bereich eingestellt werden. Weiterhin ist es möglich, inerte Lösungsmittel wie Toluol oder Hexan, Inertgas wie Stickstoff oder Argon und kleinere Mengen Polypropylenpulver mitzuverwenden. Die erfindungsgemäßen statistischen Propylencopolymerisate weisen vorzugsweise Molmassen (Gewichtsmittel) von 20 000 bis 500 000 g/mol auf. Ihre Schmelze-Fließraten (MFR), bei 230°C und unter einem Gewicht von 2,16 kg, nach ISO 1133 liegen im Bereich von 0,1 bis 100 g/10 min, insbesondere im Bereich von 0,5 bis 50 g/10 min.

Die erfindungsgemäßen statistischen Copolymerisate des Propylens mit Ethylen und mindestens einem $C_4$-$C_{10}$-Alk-1-en zeichnen sich gegenüber den bisher bekannten statistischen Propylencopolymerisaten insbesondere durch weiter abgesenkte xylollösliche Anteile, d.h. eine verbesserte Stereospezifität, und eine höhere Steifigkeit aus. Die erfindungsgemäßen Copolymerisate zeigen eine verbesserte Rieselfähigkeit das Granulats. Die Siegeleigenschaften der erfindungsgemäßen statistischen Copolymerisate sind deutlich verbessert, d.h sie weisen einen niedrigeren Siegelbeginn auf. Darüberhinaus zeigen die aus den erfindungsgemäßen Copolymerisaten hergestellten BOPP-Folien (biaxial orientierte Polypropylenfolien) einen höheren Glanz und eine niedrigere Trübung (Haze), d.h. eine bessere Transparenz.

Aufgrund ihrer guten anwendungstechnischen Eigenschaften eignen sich die erfindungsgemäßen statistischen Propylencopolymerisate vor allem zur Herstellung von Folien, Fasern oder Formkörpern.

Beispiele

Beispiele 1 bis 3 und Vergleichsbeispiele A und B

Die in der Tabelle aufgeführten Ergebnissen wurden folgendermaßen ermittelt:

Der Ethylen-Gehalt und der But-1-en-Gehalt wurden durch $^{13}$C-NMR-Spektroskopie an Polymergranulat bestimmt.

Zur Ermittlung der xylollöslichen Anteile wurden 5 g Polymer in 500 ml destilliertes Xylol (Isomerengemisch), das zuvor auf 100°C erhitzt worden war, gegeben. Anschließend wurde die Mischung auf den Siedepunkt des Xylols erhitzt und 60 min bei dieser Temperatur gehalten. Daraufhin wurde innerhalb von 20 min mit einem Kältebad auf 5°C abgekühlt und dann wieder auf 20°C erwärmt. Diese Temperatur wurde für 30 min gehalten. Das ausgefallene Polymerisat wurde abfiltriert. Von dem Filtrat wurden exakt 100 ml abgefüllt und das Lösungsmittel am Rotationsverdampfer entfernt. Der verbleibende Rückstand wurde für 2 h bei 80°C/200 Torr getrocknet und nach dem Erkalten ausgewogen.

Der xylollösliche Anteil ergibt sich aus

$$X1 = \frac{g \times 500 \times 100}{G \times V}$$

X1 = xylollöslicher Anteil in %
g = gefundene Menge
G = Produkteinwaage
V = Volumen der eingesetzten Filtratmenge

Der Schmelzpunkt wurde mittels Differential Scanning Calorimetry (DSC) mit einer Aufheizrate von 10°C pro Minute nach ISO 3146 bestimmt.

Der G-Modul wurde nach ISO 6721-2 ermittelt.

Unter der Kugeldruckhärte ist die Kugeldruckhärte H 132/30 nach ISO 2039-1 zu verstehen.

Zur Prüfung der Folieneigenschaften wurden 50µm dicke Flachfolien hergestellt.

Die Bestimmung des Glanzes erfolgte nach ISO/IEC 2813.

Die Bestimmung der Trübung (Haze) erfolgte nach ASTM D-1003.

Zur Bestimmung des Siegelbeginns wurden mit einem Siegelgerät der Fa. Brugger, Type NDS heißgesiegelte Proben (Siegelnaht 200 mm x 50 mm) hergestellt, indem eine Folie bei unterschiedlichen Temperaturen mit Hilfe zweier beheizbarer Siegelbacken bei einem Siegeldruck von 0,35 N/cm$^2$ und einer Siegeldauer von 0,5 s gesiegelt wurden. Aus den gesiegelten Proben wurden Prüfstreifen von 15 mm Breite geschnitten. Die T-Siegelnahtfestigkeit, d.h. die

zur Trennung der Prüfstreifen erforderliche Kraft, wurde in einer Zugprüfmaschine mit 200 mm/min bestimmt, wobei die Siegelnahtebene einen rechten Winkel zur Zugrichtung bildete. Die minimale Siegeltemperatur (Siegelbeginn) ist die Temperatur, bei der eine Siegelnahtfestigkeit von 1 N/15 mm erreicht wird. Eine Probe zeigt ein umso besseres Siegelverhalten je niedriger der Siegelbeginn liegt.

Die Bestimmung der Rieselfähigkeit des Granulats erfolgte nach DIN 53492 (unterer Durchmesser des Trichters 25 mm).

Zur Bestimmung des mittleren Teilchendurchmessers des eingesetzten Kieselgels wurde durch Coulter-Counter-Analyse die Korngrößenverteilung der Kieselgelpartikel ermittelt und daraus der Medianwert berechnet.

Die Bestimmung des Porenvolumens erfolgte sowohl durch Quecksilber-Porosimetrie nach DIN 66133 als auch durch Stickstoff-Adsorption nach DIN 66131.

Die spezifischen Oberfläche wurde durch Stickstoff-Adsorption nach DIN 66131 bestimmt.

Die Bestimmung der mittleren Teilchengröße der Primärpartikel sowie des makroskopischen Volumenanteils der Hohlräume und Kanäle des verwendeten Kieselgels geschah durch Bildanalyse mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des Kieselgels.

Beispiel 1

Herstellung der titanhaltigen Feststoffkomponente $a_1$)

In einer ersten Stufe wurde ein feinteiliges Kieselgel, das einen mittleren Teilchendurchmesser von 30 µm, ein Porenvolumen von 1,5 $cm^3$/g und eine spezifische Oberfläche von 260 $m^2$/g aufwies, mit einer Lösung von n-Butyloctylmagnesium in n-Heptan versetzt, wobei pro Mol $SiO_2$ 0,3 mol der Magnesiumverbindung eingesetzt wurden. Das feinteilige Kieselgel war zusätzlich durch eine mittlere Teilchengröße der Primärpartikel von 3-5 µm und durch Hohlräume und Kanäle mit einem Durchmesser von 3-5 µm charakterisiert, wobei der makroskopische Volumenanteil der Hohlräume und Kanäle am Gesamtpartikel bei etwa 15 % lag. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 mol Ethanol pro Mol Magnesium versetzt. Dieses Gemisch wurde 0,5 Stunden bei 80°C gerührt und anschließend mit 7,2 mol Titantetrachlorid und 0,5 mol Di-n-butylphthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente enthielt

3,5 Gew.-% Ti
7,4 Gew.-% Mg
28,2 Gew.-% Cl.

Polymerisation

Die Polymerisation wurde in einem vertikal gerührten Gasphasenreaktor mit einem Nutzvolumen von 800 l in Anwesenheit von Wasserstoff als Molmassenregler bei einer Temperatur von 70°C und unter einem Druck von 20 bar durchgeführt. Der Reaktor enthielt ein gerührtes Festbett aus feinteiligem Polymerisat.

In dem Gasphasenreaktor wurde ein gasförmiges Gemisch aus Propylen, Ethylen und But-1-en eingeleitet, wobei das Verhältnis zwischen dem Partialdruck des Propylens und dem des Ethylens 72 : 1 und das Verhältnis zwischen dem Partialdruck des But-1-ens und dem des Ethylens 3,9 : 1 betrug. Dieses Monomerengemisch wurde bei einer mittleren Verweilzeit von 2,8 Stunden mit Hilfe der titanhaltigen Feststoffkomponente $a_1$) kontinuierlich polymerisiert, wobei pro Stunde 4,3 g der titanhaltigen Feststoffkomponente $a_1$) sowie 250 mmol Triethylaluminium und 25 mmol Dimethoxyisobutylisopropylsilan als Cokatalysatoren verwendet wurden.

Es wurde ein statistisches Propylen-Ethylen-But-1-en-Copolymerisat mit einer Schmelze-Fließrate (HLMR) von 116 g/10 min (bei 230°C und 21,6 kg nach ISO 1133) erhalten. Das Produkt wurde anschließend peroxidisch auf eine Schmelze-Fließrate (MFR) von 4,7 g/10 min (bei 230°C und 2,16 kg nach ISO 1133) abgebaut. Die weiteren Polymerdaten finden sich in der nachfolgenden Tabelle.

Vergleichsbeispiel A

Analog Beispiel 1 wurde mit dem gleichen Katalysatorsystem unter gleichen Polymerisationsbedingungen in

einem vertikal gerührten 800 l-Gasphasenreaktor polymerisiert, jedoch betrug das Verhältnis zwischen dem Partialdruck des Propylens und dem des Ethylens 38 : 1 und das Verhältnis zwischen dem Partialdruck des But-1-ens und dem des Ethylens 0,88 : 1.

Es wurde ein statistisches Propylen-Ethylen-But-1-en-Copolymerisat mit einer Schmelze-Fließrate (HLMR) von 105 g/10 min (bei 230°C und 21,6 kg nach ISO 1133) erhalten. Das Produkt wurde anschließend peroxidisch auf eine Schmelze-Fließrate (MFR) von 5,0 g/10 min (bei 230°C und 2,16 kg nach ISO 1133) abgebaut. Die weiteren Polymerdaten finden sich in der nachfolgenden Tabelle.

Beispiel 2

Das erfindungsgemäße Beispiel 1 wurde analog wiederholt, jedoch wurde bei der Polymerisation unter ansonsten identischen Bedingungen das Verhältnis zwischen dem Partialdruck des Propylens und dem des Ethylens auf 74 : 1 und das Verhältnis zwischen dem Partialdruck des But-1-ens und dem des Ethylens auf 4,5 : 1 eingestellt.

Es wurde ein statistisches Propylen-Ethylen-But-1-en-Copolymerisat mit einer Schmelze-Fließrate (HLMR) von 102 g/10 min (bei 230°C und 21,6 kg nach ISO 1133) erhalten. Das Produkt wurde anschließend peroxidisch auf eine Schmelze-Fließrate (MFR) von 4,9 g/10 min (bei 230°C und 2,16 kg nach ISO 1133) abgebaut. Die weiteren Polymerdaten finden sich in der nachfolgenden Tabelle.

Beispiel 3

Unter Verwendung der titanhaltigen Feststoffkomponente $a_1$) wurde in einem vertikal gerührten Gasphasenreaktor mit einem Nutzvolumen von 12,5 $m^3$ in Anwesenheit von Wasserstoff als Molmassenregler bei einer Temperatur von 75°C und unter einem Druck von 20 bar ein gasförmiges Gemisch aus Propylen, Ethylen und But-1-en polymerisiert. Der Reaktor enthielt ein gerührtes Festbett aus feinteiligem Polymerisat.

Die Monomerzufuhr wurde so geregelt, daß im Gasphasenreaktor das Verhältnis zwischen dem Partialdruck des Propylens und dem des Ethylens 75 : 1 und das Verhältnis zwischen dem Partialdruck des But-1-ens und dem des Ethylens 5 : 1 betrug. Dieses Monomerengemisch wurde bei einer mittleren Verweilzeit von 2,6 Stunden mit Hilfe der titanhaltigen Feststoffkomponente $a_1$) kontinuierlich polymerisiert, wobei pro 1000 kg Propylencopolymerisat 0,2 kg Triethylaluminium und 25 g Dimethoxyisobutylisopropylsilan als Katalysatorbestandteile verwendet wurden.

Es wurde ein statistisches Propylen-Ethylen-But-1-en-Copolymerisat mit einer Schmelze-Fließrate (HLMR) von 128 g/10 min (bei 230°C und 21,6 kg nach ISO 1133) erhalten. Das Produkt wurde anschließend peroxidisch auf eine Schmelze-Fließrate (MFR) von 5,0 g/10 min (bei 230°C und 2,16 kg nach ISO 1133) abgebaut. Die weiteren Polymerdaten finden sich in der nachfolgenden Tabelle.

Vergleichsbeispiel B

Analog Beispiel 3 wurde mit dem gleichen Katalysatorsystem unter gleichen Polymerisationsbedingungen in einem vertikal gerührten 12,5 $m^3$-Gasphasenreaktor polymerisiert, jedoch betrug das Verhältnis zwischen dem Partialdruck des Propylens und dem des Ethylens 25 : 1 und das Verhaltnis zwischen dem Partialdruck des But-1-ens und dem des Ethylens 0,65 : 1.

Es wurde ein statistisches Propylen-Ethylen-But-1-en-Copolymerisat mit einer Schmelze-Fließrate (HLMR) von 112 g/10 min (bei 230°C und 21,6 kg nach ISO 1133) erhalten. Das Produkt wurde anschließend peroxidisch auf eine Schmelze-Fließrate (MFR) von 5,2 g/10 min (bei 230°C und 2,16 kg nach ISO 1133) abgebaut. Die weiteren Polymerdaten finden sich in der nachfolgenden Tabelle.

Tabelle

| | Beispiel 1 | Vergleichs-beispiel A | Beispiel 2 | Beispiel 3 | Vergleichs-beispiel B |
|---|---|---|---|---|---|
| Ethylen-Gehalt im Polymerisat [Gew.-%] | 2,0 | 4,0 | 2,0 | 2,6 | 3,9 |
| But-1-en-Gehalt im Polymerisat [Gew.-%] | 5,6 | 2,6 | 7,2 | 6,8 | 2,5 |
| Xylollöslischer Anteil [Gew.-%] | 6,3 | 9,8 | 6,8 | 7,9 | 10,9 |
| DSC-Schmelzpunkt [°C] | 133,4 | 132,0 | 131,8 | 128,5 | 129,3 |
| G-Modul [MPa] | 398 | 320 | 340 | 340 | 280 |
| Kugeldruckhärte [MPa] | | | 36 | 37 | 33 |
| Glanz an Flachfolie (50µm) [%] | | | 116 | 116 | 87 |
| Trübung an *Flachfolie* (50µm) [%] | | | 1,1 | 0,9 | 3,2 |
| Siegelbeginn [°C] | | | 112 | 110 | 115 |
| Rieselfähigkeit [25 mm, g/s] | 63 | 57 | 65 | 67 | 55 |

Ein Vergleich zwischen den erfindungsgemäßen Beispielen 1 bis 3 und den Vergleichsbeispielen A und B macht deutlich, daß die erfindungsgemäßen statistischen Copolymerisate des Propylens geringere xylollösliche Anteile, eine verbesserte Rieselfähigkeit des Granulats, sowie eine erhöhte Steifigkeit und Härte (höherer G-Modul und Kugeldruckhärte) aufweisen. Darüber hinaus weisen die aus den erfindungsgemäßen Copolymerisaten hergestellten Folien verbesserte Folieneigenschaften (Glanz, Trübung und vor allem einen niedrigeren Siegelbeginn) auf.

**Patentansprüche**

1. Statistische Copolymerisate des Propylens mit Ethylen und mindestens einem $C_4$-$C_{10}$-Alk-1-en, deren Schmelzpunkt, bestimmt nach der DSC-Methode, kleiner oder gleich 135°C ist, erhältlich durch
Polymerisation von Propylen, Ethylen und mindestens einem $C_4$-$C_{10}$-Alk-1-en in Abwesenheit eines flüssigen Reaktionsmediums aus der Gasphase heraus bei einer Temperatur von 50 bis 100°C und einem Druck von 15 bis 40 bar in Gegenwart eines Ziegler-Natta-Katalysatorsystems enthaltend,

    a) eine titanhaltige Feststoffkomponente, enthaltend mindestens eine halogenhaltige Magnesiumverbindung, einen Elektronendonor und ein anorganisches Oxid als Träger,

    b) eine Aluminiumverbindung und

    c) eine weitere Elektronendonorverbindung,

    **dadurch gekennzeichnet, daß** man das Verhältnis der Partialdrücke von Propylen und Ethylen auf von 20:1 bis 100:1 und das Verhältnis der Partialdrücke von dem oder den $C_4$-$C_{10}$-Alk-1-enen und Ethylen auf von 2,5:1 bis 20:1 einstellt.

2. Statistische Copolymerisate nach Anspruch 1, wobei ein anorganisches Oxid als Träger der titanhaltigen Feststoffkomponente verwendet wird, welches einen mittleren Teilchendurchmesser von 5 bis 200 µm, einen mittleren Teilchendurchmesser der Primärpartikel von 1 bis 20 µm und Hohlräume bzw. Kanäle mit einem mittleren Durchmesser von 0,1 bis 20 µm aufweist, deren makroskopischer Volumenanteil am Gesamtpartikel im Bereich von 5 bis 30 % liegt.

3. Statistische Copolymerisate nach Anspruch 2, wobei ein anorganisches Oxid verwendet wird, welches Hohlräume und Kanäle mit einem mittleren Durchmesser von 1 bis 15 µm aufweist, deren makroskopischer Volumenanteil am Gesamtpartikel im Bereich von 10 bis 30 % liegt.

4. Statistische Copolymerisate nach Anspruch 1 bis 3, wobei es sich bei dem anorganischen Oxid um ein Oxid des Siliciums, des Aluminiums, des Titans oder um ein Oxid eines Metalls der I. bzw. II. Hauptgruppe des Periodensystems handelt.

5. Statistische Copolymerisate nach den Ansprüchen 1 bis 4, wobei das verwendete anorganische Oxid sprühgetrocknet ist.

6. Statistische Copolymerisate nach den Ansprüchen 1 bis 5, **dadurch gekennzeichnet, daß** das Verhältnis der Partialdrücke von Propylen und Ethylen auf von 40:1 bis 90:1 eingestellt wird.

7. Statistische Copolymerisate nach den Ansprüchen 1 bis 6, **dadurch gekennzeichnet, daß** das Verhältnis der Partialdrücke von dem oder den $C_4$-$C_{10}$-Alk-1-enen und Ethylen auf von 3,5:1 bis 10:1 eingestellt wird.

8. Verfahren zur Herstellung von statistischen Copolymerisaten des Propylens mit Ethylen und mindestens einem $C_4$-$C_{10}$-Alk-1-en, deren Schmelzpunkt, bestimmt nach der DSC-Methode, kleiner oder gleich 135°C ist, durch Polymerisation von Propylen, Ethylen und mindestens einem $C_4$-$C_{10}$-Alk-1-en in Abwesenheit eines flüssigen Reaktionsmediums aus der Gasphase heraus bei einer Temperatur von 50 bis 100°C und einem Druck von 15 bis 40 bar in Gegenwart eines Ziegler-Natta-Katalysatorsystems enthaltend,

    a) eine titanhaltige Feststoffkomponente, enthaltend mindestens eine halogenhaltige Magnesiumverbindung, einen Elektronendonor und ein anorganisches Oxid als Träger

b) eine Aluminiumverbindung und

c) eine weitere Elektronendonorverbindung,

**dadurch gekennzeichnet, daß** man das Verhältnis der Partialdrücke von Propylen und Ethylen auf von 20:1 bis 100:1 und das Verhältnis der Partialdrücke von dem oder den $C_4$-$C_{10}$-Alk-1-enen und Ethylen auf von 2,5:1 bis 20:1 einstellt.

**9.** Verfahren nach Anspruch 8, wobei man als Träger der titanhaltigen Feststoffkomponente ein anorganisches Oxid verwendet, welches einen mittleren Teilchendurchmesser von 5 bis 200 µm, einen mittleren Teilchendurchmesser der Primärpartikel von 1 bis 20 µm und Hohlräume bzw. Kanäle mit einem mittleren Durchmesser von 1 bis 20 µm aufweist, deren makroskopischer Volumenanteil am Gesamtpartikel im Bereich von 5 bis 30 % liegt.

**10.** Verfahren nach Anspruch 8 oder 9, wobei man die Polymerisation bei mittleren Verweilzeiten von 0,5 bis 3 Stunden durchführt.

**11.** Verwendung der statistischen Copolymerisate gemäß den Ansprüchen 1 bis 7 zur Herstellung von Folien, Fasern oder Formkörpern.

**12.** Folien, Fasern oder Formkörper enthaltend statistische Copolymerisate gemäß den Ansprüchen 1 bis 7.

## Claims

**1.** A random copolymer of propylene with ethylene and at least one $C_4$-$C_{10}$-alk-1-ene, which has a melting point, determined by the DSC method, of less than or equal to 135°C and is obtainable by polymerization of propylene, ethylene and at least one $C_4$-$C_{10}$-alk-1-ene in the absence of a liquid reaction medium from the gas phase at from 50 to 100°C and a pressure of from 15 to 40 bar in the presence of a Ziegler-Natta catalyst system comprising

a) a titanium-containing solid component comprising at least one halogen-containing magnesium compound, an electron donor and an inorganic oxide as support,

b) an aluminum compound and

c) a further electron donor compound,

wherein the ratio of the partial pressures of propylene and ethylene is set to from 20:1 to 100:1 and the ratio of the partial pressures of the $C_4$-$C_{10}$-alk-1-ene(s) and ethylene is set to from 2.5:1 to 20:1.

**2.** A random copolymer as claimed in claim 1, wherein the inorganic oxide used as support in the titanium-containing solid component has a mean particle diameter of from 5 to 200 µm, a mean particle diameter of the primary particles of from 1 to 20 µm and voids and channels which have a mean diameter of from 0.1 to 20 µm and a macroscopic proportion by volume in the total particle in the range from 5 to 30%.

**3.** A random copolymer as claimed in claim 2, wherein the inorganic oxide used has voids and channels which have a mean diameter of from 1 to 15 µm and a macroscopic proportion by volume in the total particle in the range from 10 to 30%.

**4.** A random copolymer as claimed in any of claims 1 to 3, wherein the inorganic oxide is an oxide of silicon, aluminum or titanium or is an oxide of a metal of main group I or II of the Periodic Table.

**5.** A random copolymer as claimed in any of claims 1 to 4, wherein the inorganic oxide used is spray dried.

**6.** A random copolymer as claimed in any of claims 1 to 5, wherein the ratio of the partial pressures of propylene and ethylene is set to from 40:1 to 90:1.

**7.** A random copolymer as claimed in any of claims 1 to 6, wherein the ratio of the partial pressures of the $C_4$-$C_{10}$-

alk-1-ene(s) and ethylene is set to from 3.5:1 to 10:1.

**8.** A process for preparing a random copolymer of propylene with ethylene and at least one $C_4$-$C_{10}$-alk-1-ene, which has a melting point, determined by the DSC method, of less than or equal to 135°C, by polymerization of propylene, ethylene and at least one $C_4$-$C_{10}$-alk-1-ene in the absence of a liquid reaction medium from the gas phase at from 50 to 100°C and a pressure of from 15 to 40 bar in the presence of a Ziegler-Natta catalyst system comprising

a) a titanium-containing solid component comprising at least one halogen-containing magnesium compound, an electron donor and an inorganic oxide as support,

b) an aluminum compound and

c) a further electron donor compound,

wherein the ratio of the partial pressures of propylene and ethylene is set to from 20:1 to 100:1 and the ratio of the partial pressures of the $C_4$-$C_{10}$-alk-1-ene(s) and ethylene is set to from 2.5:1 to 20:1.

**9.** A process as claimed in claim 8, wherein the support used in the titanium-containing solid component is an inorganic oxide which has a mean particle diameter of from 5 to 200 µm, a mean particle diameter of the primary particles of from 1 to 20 µm and voids and channels which have a mean diameter of from 1 to 20 µm and a macroscopic proportion by volume in the total particle in the range from 5 to 30%.

**10.** A process as claimed in claim 8 or 9, wherein the polymerization is carried out at a mean residence time of from 0.5 to 3 hours.

**11.** The use of a random copolymer as claimed in any of claims 1 to 7 for producing films, fibers or moldings.

**12.** A film, fiber or molding comprising a random copolymer as claimed in any of claims 1 to 7.

**Revendications**

**1.** Copolymères statistiques du propylène avec l'éthylène et au moins un alc-1-ène en $C_4$-$C_{10}$, dont le point de fusion, déterminé par la méthode ATD (analyse thermique différentielle) est inférieur ou égal à 135°C, pouvant être obtenus par :

- polymérisation de propylène, éthylène et au moins un alc-1-ène en $C_4$-$C_{10}$, en absence d'un milieu de réaction liquide, à partir de la phase gazeuse, à une température de 50 à 100°C et sous une pression de 15 à 40 bars, en présence d'un système catalytique de Ziegler-Natta contenant :

  a) un composant solide contenant du titane et contenant au moins un dérivé de magnésium halogéné, un donneur d'électrons et un oxyde minéral en tant que support,
  b) un composé contenant de l'aluminium, et
  c) un autre composé donneur d'électrons,

**caractérisés en ce qu'**on ajuste le rapport des pressions partielles du propylène et de l'éthylène à une valeur allant de 20:1 à 100:1 et le rapport des pressions partielles de l'alc-1-ène en $C_4$-$C_{10}$ ou des alc-1-ène(s) en $C_4$-$C_{10}$ et de l'éthylène à une valeur allant de 2,5:1 à 20:1.

**2.** Copolymères statistiques selon la revendication 1, dans lesquels on utilise comme support du composant solide contenant du titane un oxyde minéral qui présente un diamètre moyen de particules de 5 à 200 µm, un diamètre moyen des particules primaires de 1 à 20 µm et des cavités ou canaux ayant un diamètre moyen de 0,1 à 20 µm, dont la fraction en volume macroscopique de la particule totale se situe dans la plage allant de 5 à 30 %.

**3.** Copolymères statistiques selon la revendication 2, dans lesquels on utilise un oxyde minéral qui comporte des cavités et des canaux ayant un diamètre moyen de 1 à 15 µm, dont la fraction en volume macroscopique de la particule totale se situe dans la plage allant de 10 à 30 %.

**4.** Copolymères statistiques selon les revendications 1 à 3, dans lesquels l'oxyde minéral consiste en un oxyde du silicium, de l'aluminium, du titane ou en un oxyde d'un métal du groupe IA ou IIA du tableau périodique.

**5.** Copolymères statistiques selon les revendications 1 à 4, dans lesquels l'oxyde minéral utilisé est séché par atomisation.

**6.** Copolymères statistiques selon les revendications 1 à 5, **caractérisés en ce que** le rapport des pressions partielles du propylène et de l'éthylène est ajusté à une valeur allant de 40:1 à 90:1.

**7.** Copolymères statistiques selon les revendications 1 à 6, **caractérisés en ce que** le rapport des pressions partielles de l'alc-1-ène en $C_4$-$C_{10}$ ou des alc-1-ènes en $C_4$-$C_{10}$ et de l'éthylène est ajusté à une valeur allant de 3,5:1 à 10:1.

**8.** Procédé pour la préparation de copolymères statistiques du propylène avec l'éthylène et au moins un alc-1-ène en $C_4$-$C_{10}$, dont le point de fusion, déterminé par la méthode ATD, est inférieur ou égal à 135°C, par :

- polymérisation de propylène, éthylène et au moins un alc-1-ène en $C_4$-$C_{10}$, en absence d'un milieu de réaction liquide, à partir de la phase gazeuse, à une température de 50 à 100°C et sous une pression de 15 à 40 bars, en présence d'un système catalytique de Ziegler-Natta contenant :

  a) un composant solide contenant du titane et contenant au moins un dérivé de magnésium halogéné, un donneur d'électrons et un oxyde minéral en tant que support,
  b) un composé contenant de l'aluminium, et
  c) un autre composé donneur d'électrons,

**caractérisé en ce qu'**on ajuste le rapport des pressions partielles du propylène et de l'éthylène à une valeur allant de 20:1 à 100:1 et le rapport des pressions partielles de l'alc-1-ène en $C_4$-$C_{10}$ ou des alc-1-ène(s) en $C_4$-$C_{10}$ et de l'éthylène à une valeur allant de 2,5:1 à 20:1.

**9.** Procédé selon la revendication 8, dans lequel on utilise comme support du composant solide contenant du titane un oxyde minéral qui présente un diamètre moyen de particules de 5 à 200 µm, un diamètre moyen des particules primaires de 1 à 20 µm et des cavités ou canaux ayant un diamètre moyen de 1 à 20 µm, dont la fraction en volume macroscopique de la particule totale se situe dans la plage allant de 5 à 30 %.

**10.** Procédé selon la revendication 8 ou 9, dans lequel on effectue la polymérisation avec des temps de séjour moyens de 0,5 à 3 heures.

**11.** Utilisation des copolymères statistiques selon les revendications 1 à 7, pour la fabrication de feuilles, de fibres ou de corps moulés.

**12.** Feuilles, fibres ou corps moulés contenant des copolymères statistiques selon les revendications 1 à 7.